# EUROPEAN PATENT APPLICATION

(11) **EP 3 025 806 A1**
(43) Date of publication of application: **01.06.2016**
(21) Application number: 15181399.5
(22) Date of filing: 18.08.2015
(51) Int. Cl.: B21J 15/02, B21J 15/36

(54) **DIE, JOINING TOOL AND DIE PRODUCTION METHOD**

(30) Priority: 28.11.2014 DE 102014117535
(71) Applicant: Newfrey LLC, New Britain, CT 06053 (US)
(72) Inventor: Bartig, Paul, 35394 Giessen (DE); Wissling, Matthias, Dr., 35394 Giessen (DE); Salah, Mohammad, 35394 Giessen (DE); Schmitt, Andreas, 35394 Giessen (DE)
(74) Representative: Witte, Weller & Partner Patentanwälte mbB

(57) **Abstract**

Die (26) for a joining tool (18), in particular for carrying out a joining method by forming with or without an auxiliary joining element, having a die shank (38) and a die head (36), wherein the die head (36) has a greater diameter (40) than the die shank (38), wherein a recess (46) for shaping an underside of a seam is formed on an axial side of the die head (36) remote from the die shank (38).

In this case, the die (28) is composed of a first die element (60) and at least a second die element (62), wherein the recess (46) is formed in part by the first die element (60) and in part by the second die element (62) (Fig. 2).

## Description

The present invention relates to a die for a joining tool, in particular for carrying out a joining method by forming with or without an auxiliary joining element, such as for example a punch riveting method using a semi-hollow punch rivet, having a die shank and a die head, wherein the die head has a greater diameter than the die shank, wherein a recess for shaping an underside of a seam is formed on an axial side of the die head remote from the die shank.

The present invention also relates to a joining tool having a frame, on which a joining head having a ram movable in a joining axis and also a die of the type described above are fixed.

Finally, the present invention relates to a method for producing such a die.

A joining tool of the type described above is used in particular in the field of the production of vehicle bodies of motor vehicles. In particular, punch riveting has recently become established as a production method, since it is suitable in particular for connecting different materials. In solid punch riveting, a solid punch rivet is driven into a workpiece arrangement, for example a metal sheet arrangement, with a die acting annularly on the underside of the punch riveted connection and ensuring that material of the workpiece arrangement flows at the circumferential region of the solid punch rivet in such a way that it engages behind rings on the outer circumference, in order to thereby produce a connection with a positive fit also in the axial direction. In addition to the punch riveting method, clinching has also become established, it being possible for this method to be carried out with or without an auxiliary joining element. Clinching is distinguished by the fact that the two joining partners are not severed by an auxiliary joining element. The seam is formed using a die by forming the joining partners (workpiece arrangement) and by the formation of an undercut. In this case, the die ensures that material flows radially outwards after a process similar to deep drawing, such that an undercut is formed. In the case of clinching with an auxiliary joining element, the auxiliary joining element serves merely to stabilize the connection.

In the case of semi-hollow punch riveting, use is made of punch rivets which have a closed rivet head and a hollow rivet shank. The semi-hollow punch rivet is likewise driven into a workpiece arrangement, with a top layer of the workpiece arrangement generally being severed and with the hollow shank deforming during the joining operation and spreading radially outwards. In this process, the shank engages behind material of a bottom layer of the workpiece arrangement and thereby produces a connection with a positive fit also in the axial direction. A further advantage of this technique consists in the fact that the workpiece arrangement is not punched through completely, but rather the underside of the seam remains closed. In other words, the die shank does not protrude on the underside of the seam.

To produce punch riveted connections of this type, use is made of punch riveting tools having a ram, by means of which a punch rivet can be driven from above into a workpiece arrangement. In this case, the workpiece arrangement rests on a die. The die has a cavity or recess, which ensures that the material flows suitably during the punch riveting operation on the underside of the workpiece arrangement. In this respect, the cavity, which is also referred to hereinbelow as a recess, often has a central elevation and a recess or cavity channel which surrounds the central elevation in an annular manner. A form of this type generally leads to a circumferentially uniform spreading apart of the hollow shank of a semi-hollow punch rivet.

The forces which are to be applied to the workpiece arrangement in the joining methods described above are considerable, particularly when use is made of comparatively hard materials or materials having a low ductility. This generally leads to wear both on the joining tool and also in particular on the joining die.

Particularly when semi-hollow punch rivets having a relatively large length are used and when a material of a workpiece arrangement on the side facing towards the die has a relatively low ductility, the recess in the die may become overfilled during the punch riveting process. This can lead to stresses on the die, which can shorten the service life of the die. It is true that it is generally possible to produce dies which have a very high ductility. This can increase the service life of the die, such that no fractures arise on the die. However, this can lead to increased wear in the sense of deformation of the base of the recess, which over time can result in nonuniform seams. A similar behaviour can be observed in the case of solid punch riveting. Particularly when joining high-strength materials, extreme levels of loading can arise on the annular protrusion of the die. This may result in premature destruction of the die.

Against this background, it is an object of the invention to specify an improved die, an improved joining tool and also an improved method for producing a die, wherein a high wear resistance and a high service life can preferably be realized.

In the case of the die mentioned in the introduction, the above object is achieved by virtue of the fact that the die is composed of a first die element and at least a second die element, wherein the recess is formed in part by the first die element and in part by the second die element.

Furthermore, the above object is achieved by a joining tool having a frame, on which a joining head having a ram movable in a joining axis and also a die of the type according to the invention are fixed.

Finally, the above object is achieved by a method for producing a die, comprising the steps of providing a first die element and at least a second die element and connecting the first die element and the second die element to one another in such a way that a recess of the die which serves to shape an underside of a seam is formed in part by the first die element and in part by the second die element.

Through the use of two die elements which each form part of the recess or cavity, a parting line or seam runs between the two die elements at least partially in the region of a base of the recess or cavity.

A suitable selection of the die elements can have the effect that the high forces introduced during a joining process into the die both in the axial and also - through the forming - in the radial direction do not lead to stress cracks. It is preferable that the parting line or seam is arranged between the die parts at the point where the most critical regions for cracking are present during a joining process. By way of example, a region of this type can be identified by a simulation in accordance with the method of finite elements. In many cases, the most critical region for cracking is an annular region on the base of the recess of the die or on the annular protrusion of a solid punch riveting die.

In the region of the recess, at least one of the surfaces of the first die element and/or of the second die element can be provided with a wear-reducing coating, for example with a PVD coating, a CVD coating, etc.

The die elements can be produced from different materials. If one of the die elements is generally subject to a relatively high level of wear, this die element can if appropriate be exchanged separately. This also gives rise to cost saving potentials during the lifetime of the die. In this respect, the production process for producing a die can be both a process in which a die is newly produced or else a process in which a die element of a die which has already been produced is exchanged.

The object is thereby achieved in its entirety.

According to a preferred embodiment, the first die element forms a radially outer part of the recess and the second die element forms a radially inner part of the recess.

In this embodiment, the parting seam between the die elements is formed in the region of the recess as a closed parting line, which can be arranged in particular in circular form in the region of a base of the recess, but can also be formed in the region between a base and an edge of the recess.

Furthermore, it is advantageous if the first die element and the second die element are arranged concentrically in relation to a joining axis.

The die elements are furthermore preferably formed in a rotationally symmetrical manner.

Furthermore, it is advantageous if the recess has a recess edge and a recess base, wherein the recess base has a central elevation, which is formed predominantly by the second die element, i.e. by the radially inner die element. The central elevation can be formed by the second die element to an extent of at least 60%, in particular 70% and preferably 80% or even to an extent of 90% or more.

In this respect, it is furthermore advantageous if the recess has a recess channel between the central elevation and the recess edge, wherein a parting seam runs between the first die element and the second die element in the region of the recess channel, in particular in the region of a deepest portion of the recess channel.

The recess channel has a substantially circular form in plan view and has a semi-toroidal form in longitudinal section. Radially to the outside, the recess channel merges into an annular recess edge, and radially to the inside the recess channel merges into the central elevation.

It is self-evident that all surface portions in the region of the recess are formed preferably by continuous contours. The two die elements can be produced from the same material with the same properties.

According to a further preferred embodiment, however, the first die element is formed from a first material which has a greater ductility than a second material from which the second die element is formed.

The first die element, which can be in the form of a die ring, is consequently produced from a relatively ductile material, whereas the radially inner die element is produced from a material which is preferably less ductile and/or has a higher wear resistance. That part of the recess which is formed by the radially inner die element can also be provided with a wear-resistant coating, as explained above.

In a punch riveting process, substantially axial forces are transmitted onto the radially inner part of the recess. It is important here that the shape of the recess changes to a relatively small extent, even if many punch riveting processes are carried out with the same die. The radially inner die element is consequently produced from a less ductile material.

The forming of the materials during the punch riveting process also gives rise to radially outwardly acting forces, which in the prior art often have the effect that the dies fracture. In the present invention, the radially outer die element, that is to say the die ring, is formed by a relatively ductile material. On the one hand, stresses are thereby absorbed in the region of the parting seam between the die elements and cracks are avoided. By virtue of the relatively ductile material of the first die element, radially outwardly acting forces of this nature can additionally be absorbed more effectively and more uniformly than is the case in less ductile materials.

According to a further preferred embodiment, the second die element forms the die shank.

The second die element consequently extends in the axial direction from the die shank over the entire axial length of the die head as far as the recess, wherein the second die element forms part of this recess.

According to a further preferred embodiment, the die has a radially oriented bearing surface at a transition from the die shank to the die head, wherein the bearing surface is formed predominantly by the second die element.

In this respect, the bearing surface can be formed by the second die element to an extent of at least 60%, in particular 70% and preferably at least 80%. The bearing surface is that surface by way of which the die rests on a surface of a die receptacle that is connected fixedly to a frame of the joining tool.

Furthermore, it is advantageous as a whole if, in the region of the die head, the second die element has a first axial portion, which is adjacent to the die shank, and has a second axial portion, which is adjacent to the recess.

The two axial portions of the second die element can have the same diameter. The diameter of the axial portions can in this case preferably be greater than the diameter of the die shank. The diameters of the axial portions can also be smaller than the diameter of the die shank, however.

However, it is particularly preferable if the first axial portion has a first diameter and if the second axial portion has a second diameter, wherein the first diameter is greater than the second diameter.

In this embodiment, it is preferable if the first diameter of the first axial portion is greater than the diameter of the die shank. In the longitudinal direction, the first die element consequently has a die shank having a die shank diameter, then a first axial portion having a first diameter, which is greater than the die shank diameter, and, adjacent to the recess, a second axial portion, the diameter of which is smaller than the diameter of the first axial portion.

The first die element, which is in the form of an annular element, can in this case have an axial length which is the same as the axial length of the die head. In this case, the first die element overlaps the second die element in the radial direction both in the region of the first axial portion thereof and in the region of the second axial portion thereof. In this embodiment, the outer circumference of the die head can be formed entirely by the first die element.

Alternatively, it is also possible, however, for the first die element to have an axial height which is smaller than the axial height of the die head. In this case, by way of example, the first die element can encompass the second axial portion, which is adjacent to the recess. In this case, an outer circumference of the die head can be formed by the first die element in the region of the second axial portion, that is to say adjacent to the recess, and the outer circumference of the die head can be formed by the second die element in the region of the first axial portion adjacent to the die shank.

The first die element and the second die element can be fixed to one another in any desired way, for example by integral connections such as welding, or adhesive bonding. Connections made by way of connecting elements such as bolts or screws are also conceivable in general.

It is particularly preferable, however, if the first die element is connected to the second die element with a force-fit. In this respect, the first and the second die element are manufactured in such a manner that a press fit is formed at the respective radial contact surfaces. As a result, the first die element can be fixed to the second die element without further integral or mechanical connecting elements. It is particularly preferable if the first die element is shrink-fitted onto the second die element.

As a result, a radial compressive force is generally exerted on the radially inner second die element by the first die element after the shrink-fitting. This radial compressive force can in this respect counteract that force which acts on parts of the recess in a radially outward direction during a joining process, for example on a portion which lies radially outside a deepest point of a recess channel. It is particularly preferable if the compressive force per unit area which is exerted by the shrink-fitting in the radial direction on the second die element is the same as that radial force per unit area which acts radially outwards on the corresponding part of the recess as a maximum desired force during a joining process.

As a whole, it is furthermore preferable if the first die element and the second die element bear against one another at a parting seam. By way of example, the parting seam can be formed in an upper region by a cylindrical surface and in a lower region by a radially extending surface, the surfaces merging into one another or intersecting one another.

In this case, it is furthermore particularly preferable if the first and/or the second die element has at least one duct adjacent to the parting seam.

A duct of this type preferably runs from the region of the recess as far as a region in which the parting seam is visible at another region of the die head, for example at a region of an outer circumference of the die head. The duct here can have an axially running portion, for example in the region of a cylindrical surface, and can furthermore have a radially extending portion, for example in the region of a radial surface of the parting seam.

It is preferable for a plurality of such ducts to be formed over the circumference of the die.

The ducts are preferably in the form of through ducts, in such a manner that air or other gases enclosed in the recess during a punch riveting process can escape, which can lead to more reliable seams.

As a whole, provision can be made of a die which, depending on the embodiment, can have a very high wear resistance and a very high service life. The risk of the die fracturing can be minimized by using a relatively ductile material for the radially outer first die element, at any rate a material which is more ductile than the material of the radially inner second die element.

A parting seam between the first die element and the second die element is preferably formed deliberately at that point or in the region of that line at which dies from the prior art regularly fracture or would fracture. Through this measure, no crack which grows in an uncontrolled manner is formed in this region under high levels of loading and high stress peaks, but instead from the outset there is a defined separation between two die elements. It is therefore possible to minimize die fractures, in particular in the case of greatly overfilled cavities or recesses of dies during a joining process. A joining method in the form of a punch riveting method by means of a semi-hollow punch rivet is described in particular above and below. All references to this punch riveting method are correspondingly applicable, however, for other forming joining methods with or without an auxiliary joining element, for example clinching, solid punch riveting, etc. The die can be formed with a central elevation at the base of the cavity or recess, can be formed with a flat base or can be equipped with a concave base, it also being possible for a depression to be provided in the centre in each of these embodiments.

It goes without saying that the features mentioned above and those still to be explained below can be used not only in the respectively indicated combination but also in other combinations or on their own, without departing from the scope of the present invention.

Exemplary embodiments of the invention are illustrated in the drawing and are explained in more detail in the following description. In the drawing:
- Fig. 1: schematically shows a punch riveting apparatus with an embodiment of a joining tool according to the invention;
- Fig. 2: shows a longitudinal sectional view through an embodiment of a die according to the invention;

- Fig. 3: shows a schematic plan view of a die according to a further embodiment of the invention;
- Fig. 4: shows a longitudinal section along the line IV-IV shown in Fig. 3; and
- Fig. 5: shows a side view of a part of the die shown in Figs. 3 and 4.

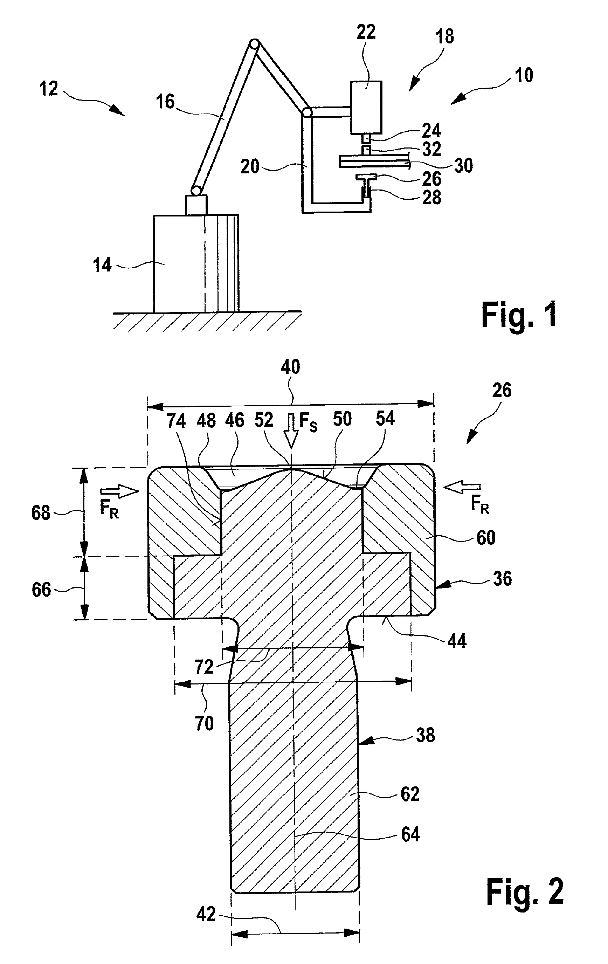

In Fig. 1, a punch riveting apparatus is shown schematically and denoted in general terms by 10. The punch riveting apparatus 10 comprises a robot 12, which has a robot base 14 and a robot arm 16 mounted movably in relation thereto. A joining tool 18 is mounted on the robot arm 16. The joining tool 18 has a C frame, at one end of which a joining head 22 is fixed. A die 26 is fixed at the other end of the C frame, to be precise at a schematically indicated die receptacle 28.

A workpiece arrangement 30, which can consist of different materials, is arranged between a punch riveting ram 24 of the joining head 22 and the die 26. By way of example, the workpiece arrangement can consist of at least two layers or metal sheets, which can be produced from the same or similar materials, for example steels. However, it is also possible that, by way of example, a die-side layer of the workpiece arrangement is produced from steel, and a ram-side layer of the workpiece arrangement 30 is produced from an aluminium material, from a carbon fibre composite material or the like.

Fig. 1 furthermore schematically shows a punch rivet 32 in the form of a semi-hollow punch rivet, which can be driven by means of the ram 24 from the ram side of the workpiece arrangement 30 into the latter, the workpiece arrangement 30 being supported on a top side of the die 26. The die has a recess, which is designed to shape an underside of the seam as the punch rivet 32 is being driven into the workpiece arrangement 30.

A punch riveting apparatus 10 of the type described in Fig. 1 is generally known. However, the die 26 is formed in accordance with the invention in contrast to known punch riveting apparatuses 10, the die 26 being composed of a first die element and at least a second die element, the recess described above being formed in part by the first die element and in part by the second die element.

An example of such a die 26 is shown in Fig. 2.

The die 26 has a die head 36 and a die shank 38. The die head 36 has a die head diameter 40, which is greater than a die shank diameter 42.

A bearing surface 44 is formed at the transition between the die head 36 and the die shank 38. A recess 46, the shape of which can generally be configured in the manner known in the prior art, is formed on the axial side of the die head 36 lying opposite the bearing surface 44. In particular, the recess 46 can have a recess edge 48 and a recess base 50. The recess 46 has a central elevation 52 in the region of the recess base 50. A recess channel 54 is formed between the central elevation 52 and the recess edge 48.

The die 26 is formed by a first die element 60 and a second die element 62. The die elements 60, 62 are arranged concentrically in relation to one another and preferably have a rotationally symmetrical form, to be precise in relation to a joining axis 64.

The second die element 62 forms the die shank 38 and, in the region of the die head 36, has a first axial portion 66 and a second axial portion 68. The first axial portion 66 is adjacent to the die shank 38 and has a diameter 70, which is greater than the die shank diameter 42 but smaller than the die head diameter 40.

In the region of the die head 36, the second die element 62 also has a second axial portion 68, which adjoins the first axial portion 66 in the axial direction and is adjacent to the recess 46. The second axial portion 68 has a second diameter 72, which is smaller than the diameter 70 of the first axial portion 66 but preferably greater than the die shank diameter 42.

The diameter 72 of the second axial portion 68 is preferably the same as the diameter of a deepest portion of the recess channel 54.

The first die element 60 has an axial height which is the same as the axial height of the die head 36, and surrounds both the first axial portion 66 and the second axial portion 68 in the radial direction. In this embodiment, the outer circumference of the die head 36 is formed exclusively by the first die element 60. The first die element 60 has a greater radial thickness in the region of the second axial portion 68 than in the region of the first axial portion 66.

A parting seam 74 between the first die element 60 and the second die element 62 runs from the deepest region of the recess channel 54, initially in the form of a cylindrical surface, as far as the first axial portion 66. In this region, the parting seam 74 comprises a radially oriented annular surface, which is oriented parallel to the bearing surface 44. Proceeding from this radially oriented annular surface, the parting seam 74 furthermore has a second cylindrical surface, which is formed in the region of the first axial portion 66 and the diameter of which is the same as the first diameter 70 of the first axial portion 66.

The parting seam 74 is represented here by surfaces which are oriented substantially at right angles to one another. However, the parting seam 74 can also be formed by a purely axial cylindrical surface or at least in certain portions by oblique, in particular conical, surfaces.

The first die element 60 is produced from a material, for example a tool steel, which has a greater ductility than the material, likewise for example a tool steel, of the second die element 62.

The first die element 60 is shrink-fitted onto the second die element 62, in such a manner that the first die element 60 exerts radial forces F_{R} on the second die element 62 in the region of the second axial portion 68. An axial force F_{S} is exerted on the die 26 during the punch riveting process, the axial force F_{S} being at least partially redirected into radial forces which preferably amount to approximately the same as the radial force F_{R} on account of the forming and the configuration of the recess 46.

Through the deliberate separation of the die 26 in the region of the die head, and in such a way that the recess 46 is formed in part by the first die element 60 and in part by the second die element 62, preferably separated by a parting seam 74 in the region of the highest expected stresses, the wear of the die can be reduced considerably, such that the service life is increased.

The second die element 62 can be provided with a wear-reducing coating in the region of the recess 46.

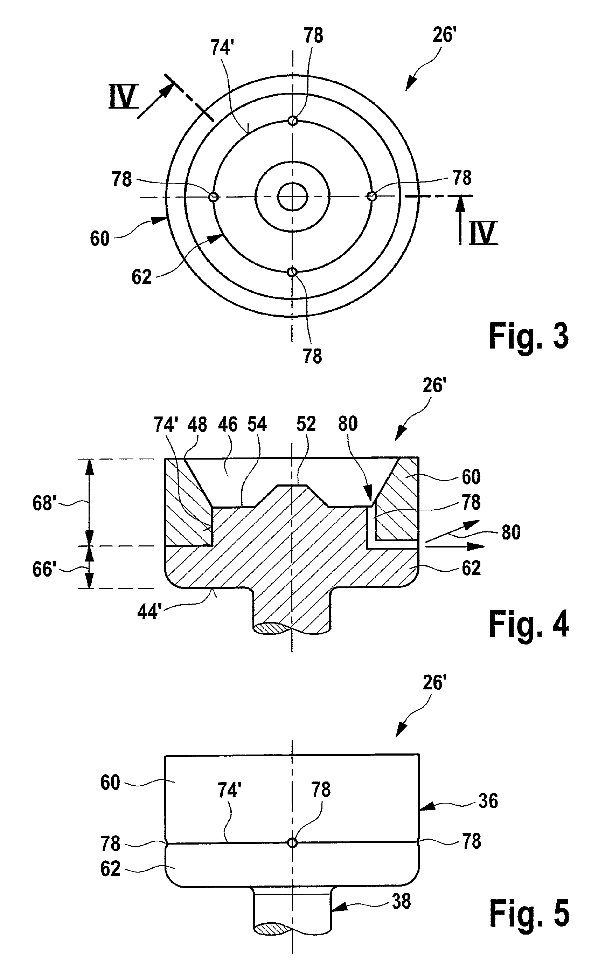

Figs. 3 to 5 show a further embodiment of a die, which corresponds in general terms to the die 26 shown in Fig. 2 with respect to the structure and the mode of operation. Identical elements are therefore denoted by identical reference signs. The text hereinbelow essentially explains the differences.

In the die 26' shown in Figs. 3 to 5, the first die element 60 is in the form of an annular element, which extends in the axial direction merely over the second axial portion 68'. In the region of the first axial portion 66, the outer circumference of the die head 36 is consequently formed by the second die element 62, which additionally forms the bearing surface 44' in its entirety. In the region of the second axial portion 68', the outer circumference of the die head 36 is formed by the first die element 60.

It can furthermore be seen in the figures that, in the region of the parting seam 74', the die 26' has a plurality of air ducts 78, which are arranged distributed over the circumference and which are formed by recesses in the first die element 60 and/or in the second die element 62 in the region of the parting seam 74'.

The air ducts 78 are in the form of through ducts, in such a manner that air 80 entering into such a duct 78 in the region of the recess 46 can flow away in the region of an outlet opening.

## Claims

1. Die (26) for a joining tool (18), in particular for carrying out a joining method by forming with or without an auxiliary joining element, having a die shank (38) and a die head (36), wherein the die head (36) has a greater diameter (40) than the die shank (38), wherein a recess (46) for shaping an underside of a seam is formed on an axial side of the die head (36) remote from the die shank (38),
**characterized in that**
the die (28) is composed of a first die element (60) and at least a second die element (62), wherein the recess (46) is formed in part by the first die element (60) and in part by the second die element (62).

2. Die according to Claim 1, **characterized in that** the first die element (60) forms a radially outer part of the recess (46) and the second die element (62) forms a radially inner part of the recess (46).

3. Die according to Claim 2, **characterized in that** the first die element (60) and the second die element (62) are arranged concentrically in relation to a joining axis (64).

4. Die according to one of Claims 1-3, **characterized in that** the recess (46) has a recess edge (48) and a recess base (50), wherein the recess base (50) has a central elevation (52) and wherein the central elevation (52) is formed predominantly by the second die element (62).

5. Die according to Claim 4, **characterized in that** the recess (46) has a recess channel (54) between the central elevation (52) and the recess edge (48), wherein a parting seam (74) runs between the first die element (60) and the second die element (62) in the region of the recess channel (54).

6. Die according to one of Claims 1-5, **characterized in that** the first die element (60) is formed from a first material which has a greater ductility than a second material from which the second die element (62) is formed.

7. Die according to one of Claims 1-6, **characterized in that** the second die element (62) forms the die shank (38).

8. Die according to one of Claims 1-7, **characterized in that** the die (26) has a radially oriented bearing surface (44) at a transition from the die shank (38) to the die head (36), wherein the bearing surface (44) is formed predominantly by the second die element (62).

9. Die according to one of Claims 1-8, **characterized in that**, in the region of the die head (36), the second die element (62) has a first axial portion (66), which is adjacent to the die shank (38), and has a second axial portion (68), which is adjacent to the recess (46).

10. Die according to Claim 9, **characterized in that** the first axial portion (66) has a first diameter (70), wherein the second axial portion (68) has a second diameter (72) and wherein the first diameter (70) is greater than the second diameter (72).

11. Die according to one of Claims 1-10, **characterized in that** the first die element (60) is shrink-fitted onto the second die element (62).

12. Die according to one of Claims 1-11, **characterized in that** the first die element (60) and the second die element (62) bear against one another at a parting seam (74), wherein the first die element (60) and/or the second die element (62) has a duct (78) adjacent to the parting seam (74).

13. Joining tool (18) having a frame (20), on which a joining head (22) having a ram (24) movable in a joining axis (64) and also a die (26) according to one of Claims 1-12 are fixed.

14. Method for producing a die (26) according to one of Claims 1-12, comprising the steps of providing a first die element (60) and at least a second die element (62) and connecting the first die element (60) and the second die element (62) to one another in such a way that a recess (46) of the die (26) which serves to shape an underside of a seam is formed in part by the first die element (60) and in part by the second die element (62).
